# EUROPEAN PATENT SPECIFICATION

(11) **EP 3 867 019 B1**
(45) Date of publication and mention of the grant of the patent: **30.11.2022**
(21) Application number: 19786823.5
(22) Date of filing: 18.10.2019
(51) Int. Cl.: B25J 9/16, B25J 9/08

(54) **ANTI-COLLISION SAFETY MEASURES FOR A MODULAR ROBOT**
ANTI-KOLLISIONS-SICHERHEITSMASSNAHMEN FÜR EINEN REKONFIGURIERBAREN MODULAREN ROBOTER
MESURES DE SECURITE ANTI-COLLISION POUR UN ROBOT MODULAIRE RECONFIGURABLE

(30) Priority: 18.10.2018 EP 18201371
(43) Date of publication of application: 25.08.2021
(60) Divisional application: 22179793.9
(73) Proprietor: Technische Universität München, 80333 München (DE)
(72) Inventor: LIU, Stefan Boson, 80797 München (DE); ALTHOFF, Matthias, 80805 München (DE)
(74) Representative: Best, Bastian
(86) International application number: PCT/EP2019/078463
(87) International publication number: WO 2020/079272

(56) References cited:
- EP-A1- 3 135 443
- WO-A2-2018/172593
- KR-A- 20130 017 697
- KR-B1- 101 714 987
- US-A1- 2017 274 528
- US-A1- 2017 348 856
- US-B1- 9 672 184
- US-B1- 10 093 019
- US-B1- 10 414 046

## Description

### FIELD

The present disclosure relates to measures for avoiding collisions involving a modular robot. In particular, the present disclosure relates to automatically avoiding collisions involving a modular robot that has been reconfigured.

### BACKGROUND

US 2017/0348856 A1 teaches a collision avoidance procedure involving a geometric model. When the geometric model is determined to interfere with a no-entry area, a repulsive force for repelling an interfering portion of the geometric model from an interfering portion of the no-entry area is virtually generated, a posture in a state where the interfering portion of the model is pushed from the no-entry area into the operating area by the repulsive force is calculated, and the calculated posture is used as a way-point.

US 2017/274528 A1 shows a robot system with a robot including a combination of mechanical units serving as multiple modules, a robot control device that controls the robot, and a memory provided in each of the mechanical units. In the memory, a shape model indicating the shape of the mechanical unit and a parameter for estimating the coasting distance of the robot are stored beforehand.

WO 2018/172593 A2 discloses a method for retraining modular robots that are dynamically equipped with new and unknown physical components integrated therein, comprising a system by means of which such components transmit their characteristics to the already-operating modular robot and by means of which this information is used to integrate the component, reset the physical configuration and retrain the logic of the robot, using Artificial Neural Network-based Reinforcement Learning, in order to perform a determined task.

US 9,672,184 B1 discloses a method which is operable by a computing device and includes receiving a request for a given task to be performed by a modular reconfigurable workcell, determining one or more peripherals required to perform the given task, and determining an optimal placement of the one or more peripherals based on the given task, wherein the one or more peripherals are coupled to the workcell in a fixed geometric configuration based on the determined optimal placement. Said method may also include determining a first calibration of the one or more peripherals based on the orientation of the one or more peripherals relative to the workcell, and determining a second calibration of the one or more peripherals based on the optimal placement of the one or more peripherals with respect to each other.

### SUMMARY

The present invention provides an anti-collision safety device and a method for a modular robot. The anti-collision safety device and the method may automatically derive a new/updated geometric model of the robot whenever a module is removed or added to the robot.

The anti-collision safety device is configured to assign modules of the robot to elements of a kinematic chain, and to determine a geometric model for the elements of the kinematic chain based on data describing the geometry of the assigned modules. The device then calculates a collision-free movement of elements of the kinematic chain based on the determined geometric model, a model of the environment, and a target position and/or orientation of at least one element of the kinematic chain.

The anti-collision safety device is further configured to retrieve the data describing the geometry of the assigned modules from the assigned modules. The data defines different shapes (virtual rigid bodies) for one or more of the modules (i.e., each module may have at least one shape assigned thereto). The different shapes differ in regard to fidelity (e.g., high, low, etc.).

For example, each module may be provided with a persistent memory and data on the geometry of the module may be stored in said memory. In addition, data on shapes approximating the geometry may be stored in said memory. The shapes may differ in size and attention to detail, wherein a smaller shape may comprise more geometric details than a larger shape approximating said geometric details.

These actions of the anti-collision safety device may be triggered by an indication that the robot has been reconfigured, i.e., that a module (e.g., a joint module or a link module) has been removed or added to the robot.

In this regard, the term "joint module", as used throughout the description and the claims, particularly refers to a chain of two or more rigid bodies, which are connected to each other by one or more actuatable joints. An actuatable joint allows controlling a position of a rigid body at a distal end of the actuatable joint relative to another rigid body at a proximal end of the actuatable joint. A motion of the distal end of a joint module relative to a proximal end of the joint module may be restrained to one, two or three (or even more) degrees of freedom. Moreover, the term "link module", as used throughout the description and the claims, particularly refers to a single rigid body. The joint and link modules both comprise a proximal end and a distal end, wherein at least the proximal end is attachable to another module. Hence, the terms "modular robot", or "robot", as used throughout the description and the claims, particularly refer to an assembly of joint modules and optionally one or more link modules connected at their proximal/distal ends. The modules may be regarded as a kinematic chain of rigid bodies connected by actuatable joints which provide constrained (or desired) motion.

Furthermore, the term "geometric model", as used throughout the description and the claims, particularly refers to a chain of rigid bodies (shapes) which may be defined by one or more geometric primitives arranged relative to each other within a common coordinate frame. In addition, the formulation "collision-free movement of elements of the kinematic chain", as used throughout the description and the claims, particularly refers to avoiding unwanted (hazardous) collisions, as opposed to desired object manipulations performed by the robot. Moreover, the term "element of a kinematic chain", as used throughout the description and the claims, particularly refers to a rigid body representing one or more modules of the robot.

By (automatically) deriving a new/updated geometric model for the kinematic chain when a module (e.g., a joint module or a link module) has been removed or added to the robot, a collision risk can be reduced, and the robot safety can be increased.

The anti-collision safety device may further be configured to extract transformations for the assigned modules from the data. Each of said transformations may correspond to one module and relate a proximal end of said module to a distal end of said module.

The anti-collision safety device may be further configured to determine the geometric model of the kinematic chain based on the extracted transformations.

The transformations allow determining the position of each module inside the robot and thus enable automatically generating the geometric model. In addition, the transformations can be used to determine the kinematic model (through generating the Denavit-Hartenberg parameters) and/or the dynamic model. Using the transformations, the geometric model can be generated independently of the complexity of the geometry of each module.

The anti-collision safety device may further be configured to update said data stored in the modules through a wired or a radio interface.

For example, a shape approximating the geometry may be replaced with another shape or a new shape may be added to the shapes stored in the memory.

The anti-collision safety device may further be configured to plan, for each of the modules of the robot, a first part of an intended path in a dynamic environment, the first part of the intended path avoiding regions in which collisions might occur. The anti-collision safety device may further be configured to plan, for each of the modules of the robot, a fail-safe maneuver at the end of the first part of the intended path, the fail-safe maneuver avoiding regions in which collisions might occur.

Collisions might occur with both static and dynamic obstacles. Notably, the trajectory of dynamic obstacles may be predicted.

The anti-collision safety device may further be configured to plan, for each of the modules of the robot, a second part of the intended path in the dynamic environment. The anti-collision safety device may further be configured to execute the fail-safe maneuver for at least those modules of the robot for which it cannot be ascertained, before the end of the first part is reached, that the second part avoids regions in which collisions might occur.

The fail-safe maneuver may be directed at causing a standstill of the robot at or before an end of the planned fail-safe maneuver.

The anti-collision safety device may further be configured to abort the fail-safe maneuver if a recovery maneuver becomes available which avoids regions in which collisions might occur.

The recovery maneuver may bring a module back onto the intended path or at least closer to the intended path, compared to following the fail-safe maneuver.

The safety device may further be configured to determine the geometric model based on approximating the geometry of the modules when being provided with said data.

I.e., the safety device may (automatically) reduce the complexity of the geometric model to decrease the computational load.

The safety device may further be configured to identify a module that has been added to the modular robot and to access a database that stores data describing the geometry of said module.

For example, a joint module and/or a link module may be provided with a memory element that stores a manufacturer and part identification (ID) which enables the safety device to search and retrieve data describing the geometry of said module. For example, a manufacturer may provide a database accessible via the internet and may regularly update the database if new joint modules/link modules become available. In another example, the data may be stored within the memory element, thereby allowing the safety device to (automatically) retrieve the data from the joint module or the link module. Notably, storing the data within the joint module or the link module reduces the risk of data tampering and hence further increases the overall safety.

The safety device may further be configured to identify a module that has been added to the modular robot by receiving a control signal via a wired or a wireless connection from said module.

For example, an added module may integrate itself into a communication network and transmit the control signal to the device via the network. For instance, the safety device may act as a master device that polls data from the network elements, or the element may broadcast the signal via the network (e.g., as part of an initialization or startup routine).

The safety device may be configured to identify the module that has been added to the modular robot by receiving the control signal via a bus interface from said module.

For instance, the modules of the modular robot may form a daisy chain or a logical ring network and a control frame (i.e., a control message with a header identifying the control data in the body) from the safety device may be circulated (from module to module) along the chain with each element adding identification data to the control frame such that the safety device learns the structure of the robot by evaluating the control frame. In another example, modules may identify themselves and their neighbors.

The safety device may further be configured to identify a module that has been added to the modular robot by evaluating a signal from a sensor of the safety device.

For example, the safety device may be provided with an RFID sensor that scans the vicinity for RFID tags attached to the modules. Hence, whenever a new RFID tag is detected, the safety device may assume that a new module (as identified by the RFID tag) has been added to the modular robot. To further increase safety, the (growing) kinematic chain may be depicted to a user and the user may take corrective action, if necessary.

The safety device may be configured to identify the module that has been added to the modular robot by analyzing an image of at least a part of the module or by activating a radio-frequency identification, RFID, tag reader.

For instance, the modules may be provided with a bar code, a matrix code, letters, numbers (or other graphical codes) that convey information which allows identifying the modules. In another example, the safety device may identify the module based on matching its shape to one of a plurality of possible shapes.

The safety device may further be configured to identify a module that has been added to the modular robot by receiving a manual user input.

For example, the user may be provided with a user terminal (connected to the safety device) that allows assembling/reconfiguring a virtual modular robot, wherein a layout of the virtual modular robot is to reflect (changes to) the structure of the physical robot. Notably, the safety device may be part of or integrated into a control system/apparatus which controls the operation (and particularly the motion) of the robot.

The method comprises reconfiguring the robot by removing one or more of first link and/or joint modules from the modular robot and adding one or more second link and/or joint modules to the modular robot, determining a geometric model of the robot based on data describing the geometry of the one or more second link and/or joint modules and while operating the robot, using the geometric model to plan collision-free paths of the remaining first and one or more second link and/or joint modules.

The data describing the geometry of the one or more second link and/or joint modules is retrieved from the one or more second link and/or joint modules, and defines different shapes for one or more of the one or more second link and/or joint modules, wherein the different shapes differ in regard to a level of approximation

The data may comprise a series of transformations corresponding to the remaining first and one or more second link and/or joint modules and a pose of one of the remaining first and one or more second link and/or joint modules in a reference frame may be given by applying the transformations of the series up to a transformation corresponding to the one of the remaining first and one or more second link and/or joint modules.

Determining the geometric model of the robot may comprise determining positions of the one or more second link and/or joint modules in a kinematic chain represented by the geometric model.

The remaining first and one or more second link and/or joint modules may comprise nodes of a wired communication network.

Determining the position of the one or more second link and/or joint modules in the kinematic chain may comprises identifying one or more nodes neighboring a node comprised in the one or more second link and/or joint modules.

Determining the positions of the one or more second link and/or joint modules within the kinematic chain may comprise taking one or more images of the robot and determining a type of the remaining first and one or more second link and joint modules detected in said one or more images.

Determining the positions of the one or more second link and/or joint modules within the kinematic chain may comprise scanning the robot for radio-frequency identification, RFID, tags attached to or embedded into the one or more second link and/or joint modules.

The method may further comprise collecting said data from the remaining first and one or more second link and/or joint modules and/or updating said data through a wired or a wireless connection.

Determining the geometric model of the robot may comprise approximating two or more neighboring link and/or joint modules of the robot as a single virtual body representing an element of the kinematic chain.

Approximating two or more neighboring link and/or joint modules of the robot as a single virtual body may involve selecting between different approximation levels.

The geometric model may comprise a chain of virtual bodies, of which each virtual body represents an element of the kinematic chain.

The method may further comprise determining a plurality of link and joint configurations from the first and second link and joint modules, determining, for each of said configurations, whether said configuration enables the robot to perform a set of subtasks of a task, determining, for each configuration that enables the robot to perform the set of subtasks, whether said configuration enables the robot to perform the task, determining, for each configuration that enables the robot to perform the task, a value indicating a cost of performing the task, according to a cost metric, by carrying out a simulation based on a/the geometric model and using the determined values to select a configuration that enables the robot to perform the task.

The method may further comprise assigning a category to the task which is to be performed by the robot, wherein the category is selected from the group consisting of tasks with given tool paths, tasks with partially given tool paths and tasks with yet to be defined tool paths within a given workspace, wherein determining whether said configuration enables the robot to perform the task comprises determining, whether said configuration enables the given tool path, the partially given tool path and any pose within the workspace, respectively.

Another method may comprise reconfiguring the robot by adding and/or removing link modules and/or joint modules to/from the robot, determining a geometric model for the robot based on data describing the geometry of the modules mounted to a frame after said reconfiguration, and using the geometric model, when the robot is operated, for collision avoidance.

In this regard, the term "frame", as used throughout the description and the claims, particularly refers to a part of the robot that remains static throughout operation and which may contain the control logic that controls the actuation of the joints. As for a mobile robot, the term "frame", as used throughout the description and the claims, particularly refers to a part of the robot to which the elements of the kinematic chain are attached, thereby forming one or more limbs of the robot which extend from the frame.

Determining the geometric model for the robot may comprise identifying a layout of the robot and accessing a database for retrieving said data.

As described above, a link module or a joint module may be provided with a memory element that holds a manufacturer and part identification (ID) which allows the safety device to search and retrieve data describing the geometry of said element. For example, a manufacturer may provide a database accessible via the internet and may regularly update the database if new link modules/joint modules become available. In another example, the data may be stored within the memory element, allowing the safety device to (automatically) retrieve the data from the link module or the joint module.

Determining the geometric model for the robot may comprise approximating one or more elements of the kinematic chain that covers two or more neighboring modules of the robot.

For example, neighboring modules that cannot or will not be moved relative to each other may be modeled (approximated) by a single virtual body representing the corresponding element of the kinematic chain. In another example, neighboring modules that may be moved relative to each other may be modeled (approximated) by a single virtual body representing an element of the kinematic chain that covers all movements that may occur.

Identifying the layout may comprise identifying a position of a link module or a joint module within a kinematic chain.

The link modules and/or the joint modules may form a daisy chain or logical ring network and identifying the position of the link module or the joint module within the kinematic chain may comprise identifying a position of the link module or the joint module within the network.

As described above, a control frame from the safety device may be circulated (from module to module) along the modular robot with each module adding identification data to the control frame such that the safety device learns the structure of the robot by evaluating the control frame. In another example, elements may identify themselves and their neighbors.

In yet another example, identifying the position of the link module or the joint module within kinematic chain may comprise taking images of the modules of the robot.

As described above, the modules may be provided with a bar code, a matrix code, letters and/or numbers that convey information which allows identifying the modules. In another example, the safety device may identify the module based on matching its shape to one of a plurality of possible shapes.

Using the geometric model, when the robot is operated, for collision avoidance may comprise calculating a collision free path for moving one or more modules based on the geometric model, wherein the geometric model comprises a chain of approximated virtual rigid bodies that can be displaced relative to each other.

It will be appreciated that the features and attendant advantages of the disclosed methods may be realized by the disclosed device and vice versa. Moreover, it is noted that throughout the description, features in brackets are to be regarded as optional.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 illustrates a process of selecting a configuration of the reconfigurable modular robot;
Fig. 2 illustrates a procedure for updating a geometric model of a kinematic chain representing the reconfigurable modular robot when the modular robot is being reconfigured;
Fig. 3 illustrates an exemplary procedure for identifying modules of the modular robot;
Fig. 4 illustrates another exemplary procedure for identifying modules of the modular robot;
Fig. 5 illustrates yet another exemplary procedure for identifying modules of the modular robot;
Fig. 6 illustrates an exemplary procedure for retrieving data describing the geometry of a module;
Fig. 7 illustrates an exemplary procedure for planning a collision free path; and
Fig. 8 shows a flow-chart of a procedure for avoiding a collision between the reconfigurable modular robot and obstacles in the environment of the robot and itself.

Notably, the drawings are not drawn to scale and unless otherwise indicated, they are merely intended to conceptually illustrate the structures and procedures described herein.

### DETAILED DESCRIPTION

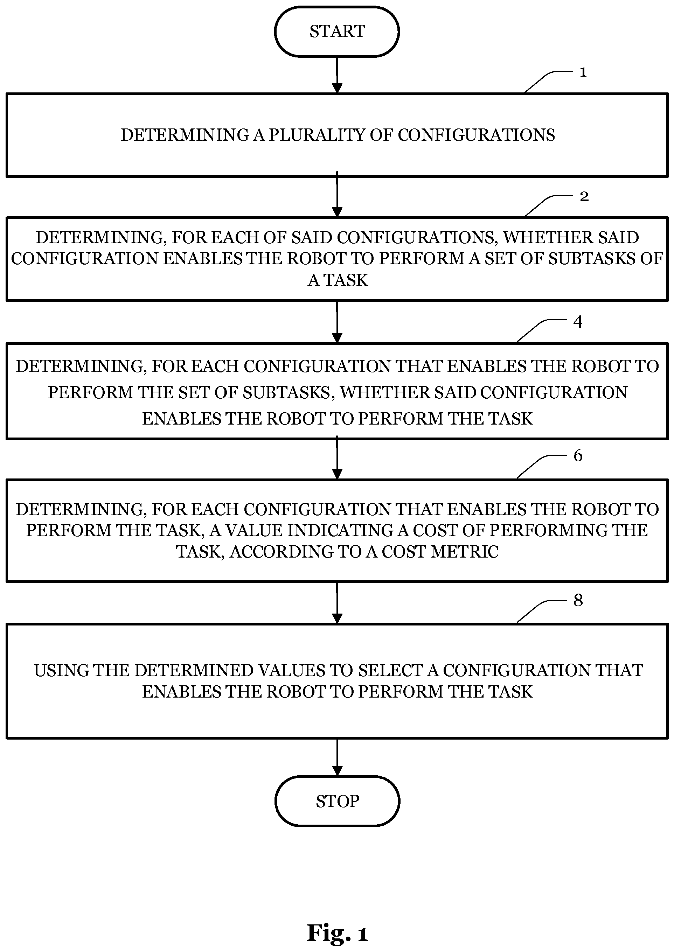

Fig. 1 illustrates a process of selecting a configuration for a reconfigurable modular robot 10. The process starts at step 1 by determining a plurality of different configurations. For example, the configurations may differ regarding the positions of modules in the kinematic chain and/or the type of modules used in the configurations. At step 2, the process is continued by determining, for each of the configurations, whether said configuration enables the robot 10 to perform a set of subtasks of a task. For example, it maybe checked whether certain positions in the workspace can be reached when applying a configuration, and configurations that do not enable reaching said positions may be dismissed to reduce the search space.

At step 4, the process continues with determining, for each configuration that enables the robot to perform the set of subtasks, whether said configuration enables the robot 10 to perform the task. I.e., those configurations that have passed the previous test may be further tested to see whether all subtasks can be performed (for example, whether all required positions can be reached). At step 6, the process is continued by determining, for each configuration that enables the robot 10 to perform the task, a value indicating a cost of performing the task, according to a cost metric. This may be achieved by carrying-out a simulation based on a geometric model representing the configuration. At step 8, the determined values are used to select a configuration that enables the robot 10 to perform the task.

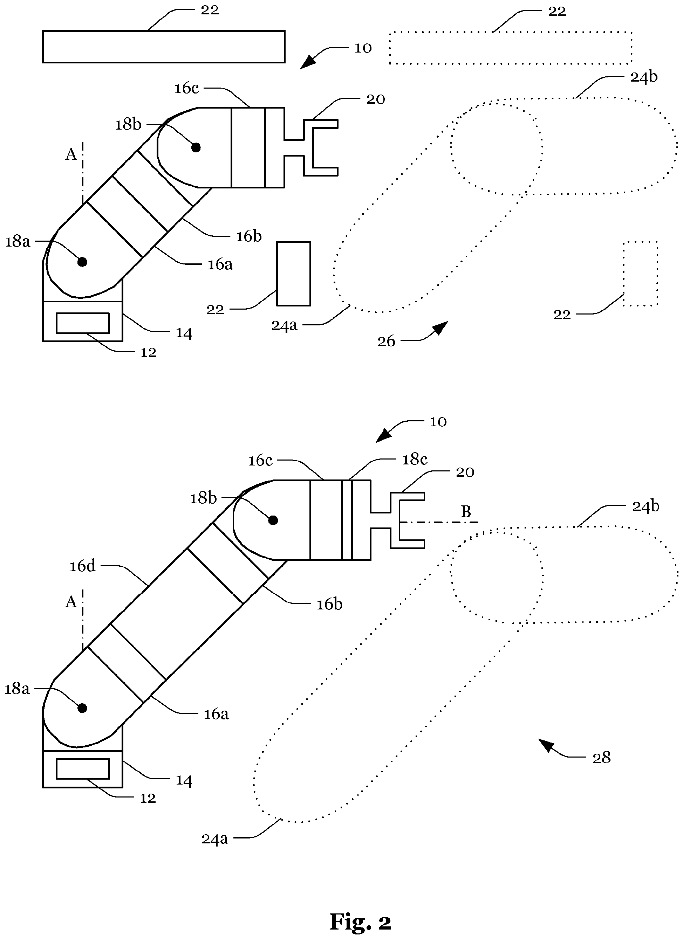

Fig. 2 illustrates how a modular robot 10 which is provided with an anti-collision safety device 12 may be reconfigured after a suitable configuration has been selected. The robot 10 comprise a frame 14 standing on solid ground. The robot 10 further comprises a first link module 16a which is attached to the frame 14 by a first joint module 18a. The first joint module 18a allows for swiveling the first link module 16a around a first horizontal axis (not shown) and a vertical axis A. The robot 10 further comprises a second link module 16b which is (removably) attached to a distal end of the first link module 16a (as depicted in the upper part of Fig. 1 that shows the modular robot 10 before the reconfiguration).

The distal end of the second link module 16b is connected to a second joint module 18b (hinge joint) which allows for swiveling a third link module 16c attached to the second link module 16b by the second joint module 18b around a second horizontal axis (not shown). The third link module 16c is connected to a tool 20 (e.g., a claw or another manipulator). When the tool 20 is to be moved to a target position, the anti-collision safety device 12 ensures that none of the modules 16a-16c, 18a, 18b or the tool 20 collides with obstacles 22 in the surrounding. To reduce the computational complexity of this task, the anti-collision safety device 12 may overapproximate the geometry of the modules 16a-16c, 18a, 18b and the tool 20 (as illustrated in the right part of Fig. 2). For example, the anti-collision safety device 12 may model the first and second link module 16a, 16b, and (parts of) the joint modules 18a, 18b as part of a first single virtual rigid body representing a first element 24a of the kinematic chain and the third link module 16c, (a part of) the joint module 18b and the tool 20 as part of a second single virtual rigid body representing a second element 24b of the kinematic chain.

The anti-collision safety device 12 may only allow a movement of the modules 16a-16c, 18a, 18b and the tool 20, if a corresponding movement of the first and second virtual rigid bodies 24a, 24b does not cause a collision with an obstacle 22. For example, movements (or a sequence of movements) of the modules 16a-16c, 18a, 18b and the tool 20 may be validated based on simulating corresponding movements of the virtual rigid bodies 24a, 24b of the (simplified) geometric model 26 within (or as part of) a model of the environment. For example, the anti-collision safety device 12 may be provided with a mono- or stereo-camera system, a laser-scanner, a lidar, an ultrasonic distance device, etc. that recognizes/tracks (static and/or dynamic) obstacles (including humans) 22 in the range of the robot 10.

When the anti-collision safety device 12 receives an indication that the robot 10 has been reconfigured, it may check whether the geometric model 26 must be updated. For example, as illustrated in the lower part of Fig.2, a fourth link module 16d may be added between the first link module 16a and the second link module 16b, and a third joint module 18c which allows for rotating the tool 20 around a third horizontal axis B (i.e., coaxially to the third link module 16c) may be added between the third link module 16c the tool 20.

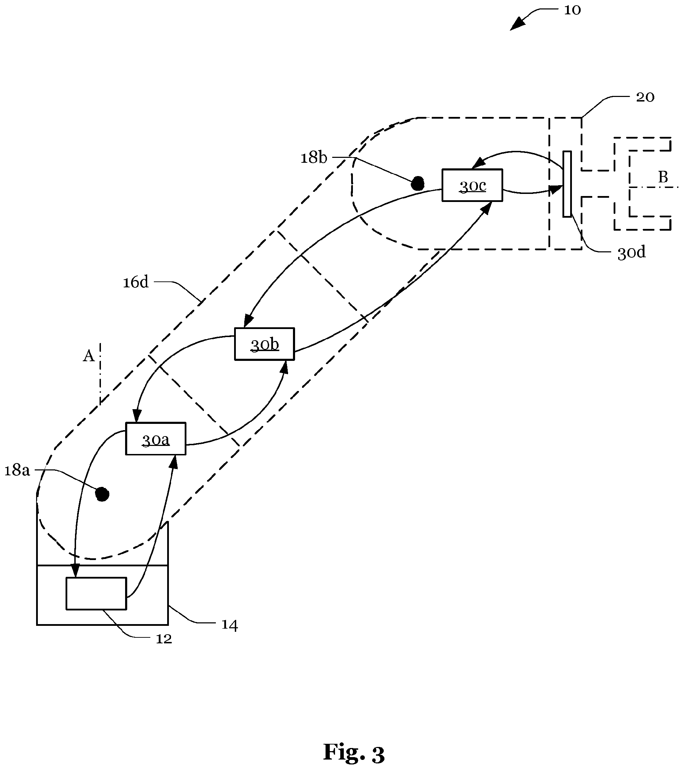

By assigning the link modules 16a-16d and the joint modules 18a-18c of the robot 10 to elements 24a, 24b of a kinematic chain on which the geometric model 26 is based, the anti-collision safety device 12 may assess the structural change and determine a new/updated geometric model 28 for the elements of the kinematic chain. Notably, the indication that the robot 10 has been reconfigured may be caused by a self-check of the robot 10 or may be manually input, as will be explained in more detailed with reference to Fig. 3-Fig. 5.

For example, as illustrated in Fig. 3 which shows a simplified version of the robot 10 shown in Fig. 2, the link modules 16a-16d, the joint modules 18a-18c, and/or the tool 20 may be provided with electronic circuits 30a-30d that are enabled to identify the element to which they are mounted. To assess the structure of the robot 10, the anti-collision safety device 12 may hence send a control frame on a round trip along the kinematic chain.

That is, the anti-collision safety device 12 may transmit an empty control frame to the electronic circuit 30a mounted to the first joint module 18a. Upon receiving the control frame, the electronic circuit 30a may add its ID and/or geometric data describing the shape of the first joint module 18a to the control frame and transmit the (modified) control frame to the electronic circuit 30b in the neighboring link module 16d, that acts likewise. When the control frame has been passed through the electronic circuits 30a-30c, it is received by the electronic circuit 30d of the tool 20 (which is the last one of the electronic circuits 30a-30d in the chain).

As the electronic circuit 30d has no neighboring element at its distal end, it may append its ID and/or geometric data describing the shape of the tool 20 and transmits the (thus modified) control frame along the chain of electronic circuits 30a-30d back to the anti-collision safety device 12. The anti-collision safety device 12 may then derive the layout of the robot 10 by analyzing the sequence of entries in the control frame. In another example, only the link modules 16a-16d or only the joint modules 18a-18c maybe provided with electronic circuits, if, for example, they can provide data on the joint modules 18a-18c and the link modules 16a-16d, respectively, to which they are connected. In other words, all elements 24a, 24b of the kinematic chain should be covered by at least one electronic circuit, but one electronic circuit may cover more than one element 24a, 24b.

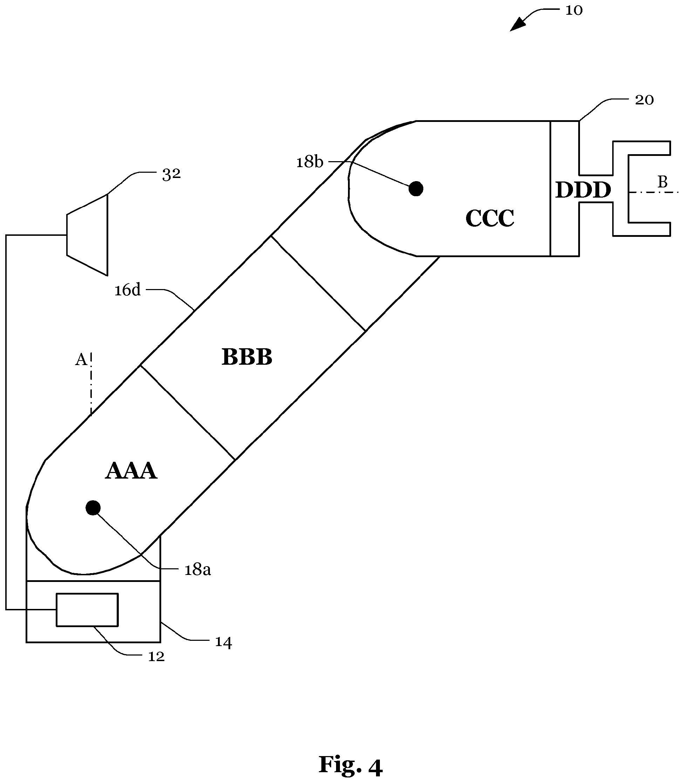

Furthermore, instead of transmitting a control frame along a daisy chain or a logical ring, each electronic circuit 30a-30d may transmit its ID and/or geometric data describing the module shape and/or information on the modules with which it is connected to the anti-collision safety device 12. For example, the electronic circuits 30a-30d may be connected to a bus or transmit the data wirelessly. In another example shown in Fig. 4, the anti-collision safety device 12 may be connected to a camera 32 that captures images of markings AAA, BBB, CCC, DDD which identify the elements of the kinematic chain. Notably, the camera 32 may also be used for recognizing/tracking (static and/or dynamic) obstacles (including humans) 22 in the range of the robot 10.

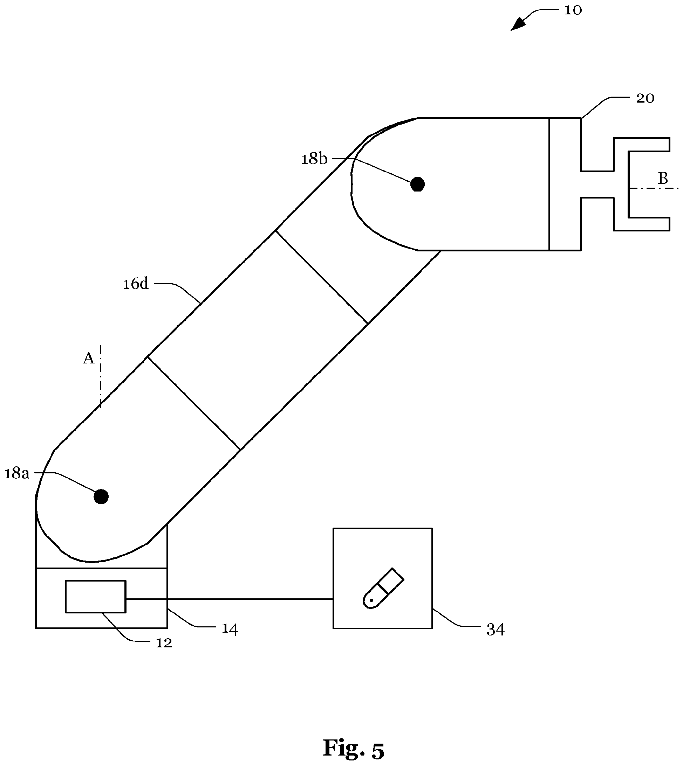

In another example shown in Fig. 5, the anti-collision safety device 12 may be connected to a user terminal/interface 34 which allows mapping the structure of the physical robot 10 to a layout of a virtual robot. For instance, the user terminal/interface 34 may comprise a (touch-) screen which shows graphic representations of the link modules 16a-16d and joint modules 18a-18c that can be attached to each other (e.g., via drag and drop). In yet another example, the user terminal/interface 34 maybe used for allowing the user to check (and confirm) that the structure of the physical robot 10 has been correctly recognized. Once the structure of the physical robot 10 has been correctly recognized by the anti-collision safety device 12, an operation of the robot 10 may be started.

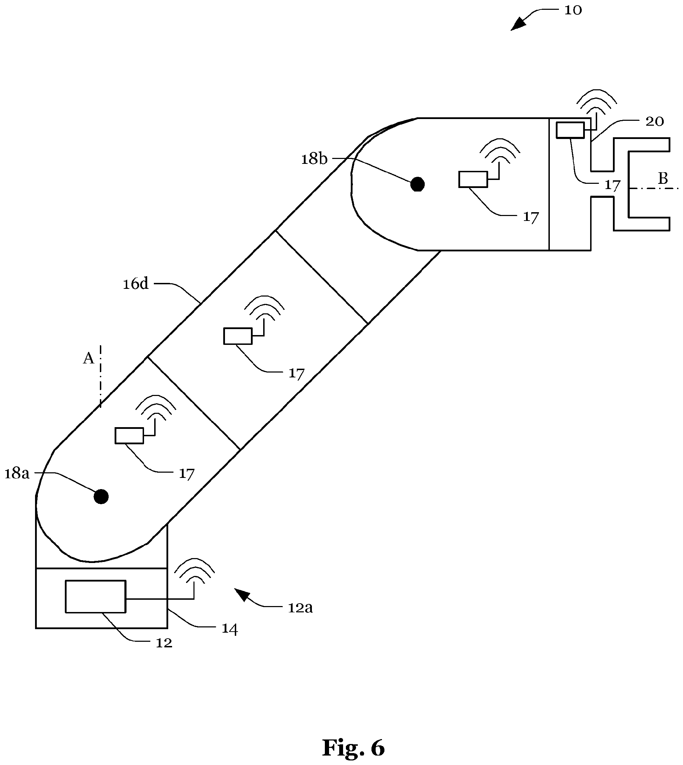

Fig. 6 illustrates an exemplary procedure for retrieving data describing the geometry of the modules 16d, 18a and 18b. The data is stored in memories 17 of the modules 16d, 18a and 18b and the anti-collision safety device 12 retrieves the data from the assigned modules 16d, 18a and 18b via a radio interface 12a. The data may define different shapes for the assigned modules 16d, 18a and 18b, wherein the different shapes differ in regard to a level of fidelity.

The anti-collision safety device 12 may also extract transformations for the assigned modules 16d, 18a, and 18b from the data. Each transformation may correspond to one of the modules 16d, 18a and 18b and relate a proximal end of said module 16d, 18a or 18b to a distal end of said module 16d, 18a or 18b. The transformations may be used to automatically compute the geometric model. Moreover, the anti-collision safety device 12 may update the data stored in the memories 17 through the radio interface 12.

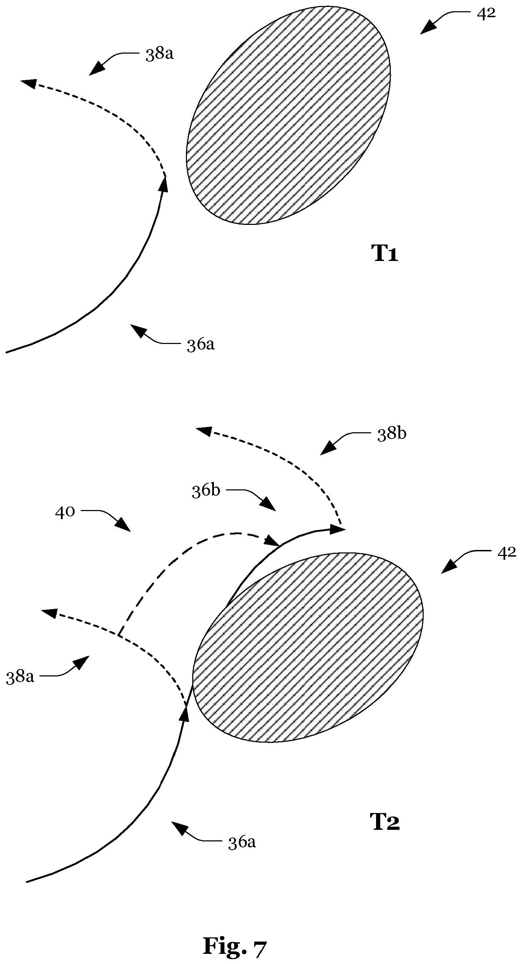

Fig. 7 illustrates an exemplary procedure for planning a collision free path for one of the modules 16d, 18a and 18b. As shown in the top part of Fig. 7, the anti-collision safety device 12 plans, at time T1 a first part 36a of an intended path in a dynamic environment which avoids regions 42 in which collisions might occur. Furthermore, the anti-collision safety device 12 plans a fail-safe maneuver 38a at the end of the first part 36a of the intended path, wherein the fail-safe maneuver 38a avoids regions 42 in which collisions might occur. The regions 42 in which collisions might occur may be determined by adding a safety distance around dynamic objects. The safety distance may grow steadily as the prediction horizon increases over time because of the uncertainty of the movements.

As the module 16d, 18a and 18b travels along the first part 36a the anti-collision safety device 12 may plan a second part 36b of the intended path and a fail-safe maneuver 38b at the end of the second part 36b. The anti-collision safety device 12 may execute the fail-safe maneuver 38a if cannot be ascertained, before the end of the first part 36a is reached at T2, that the second part 36b avoids regions 42 in which collisions might occur, as shown in in the bottom part of Fig. 7. The fail-safe maneuver 38a causes a standstill of the robot 10. The anti-collision safety device 12 aborts the fail-safe maneuver 38a if a recovery maneuver 40 becomes available which avoids regions 42 in which collisions might occur.

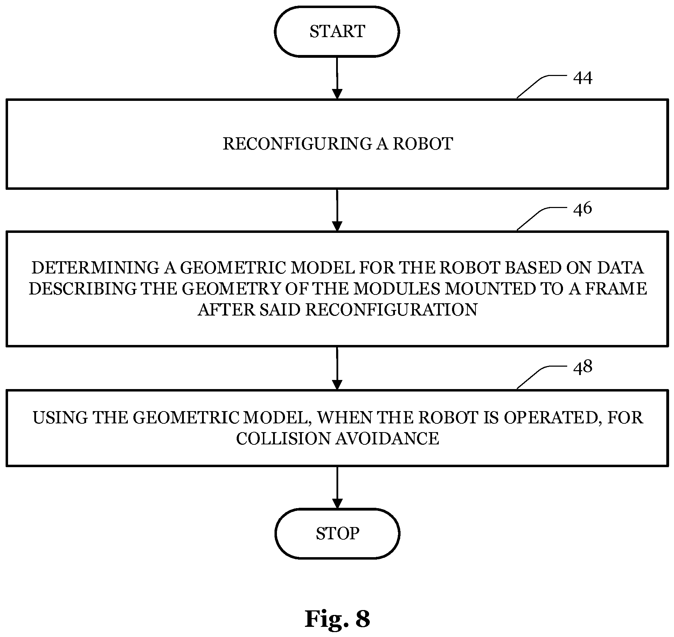

Fig. 8 shows a flow-chart of a procedure for avoiding a collision between the reconfigurable modular robot 10 and obstacles 22 in the environment of the robot 10. The procedure starts at step 44 with reconfiguring the robot 10 by adding and/or removing link modules 16a-16d and/or joint modules 18a-18c to/from the robot 10 in accordance with a layout defining relations between elements of a kinematic chain. The procedure is then continued at step 46 with determining a geometric model 26, 28 for the kinematic chain based on data describing the geometry of the link modules 16a-16d and the joint modules 18a-18c mounted to the frame 14. The geometric model 26, 28 may then be used at step 48 for collision avoidance, when the robot 10 is operated. Notably, all aspects described in relation to procedures also relate to the anti-collision safety device 12, and vice versa.

### LIST OF REFERENCE NUMERALS

- 1: process step
- 2: process step
- 4: process step
- 6: process step
- 8: process step
- 10: robot
- 12: safety device
- 12a: radio interface
- 14: frame
- 16a: link module
- 16b: link module
- 16c: link module
- 16d: link module
- 17: memory
- 18a: joint module
- 18b: joint module
- 18c: joint module
- 20: tool
- 22: obstacle
- 24a: element (kinematic chain)
- 24b: element (kinematic chain)
- 26: geometric model
- 28: geometric model
- 30a: electronic circuit
- 30b: electronic circuit
- 30c: electronic circuit
- 30d: electronic circuit
- 30e: electronic circuit
- 32: camera
- 34: user terminal/interface
- 36a: first part (intended path)
- 36b: second part (intended path)
- 38a: fail-safe maneuver
- 38b: fail-safe maneuver
- 40: recovery maneuver
- 42: region (where collisions are possible)
- 44: process step
- 46: process step
- 48: process step
- A: axis
- B: axis

## Claims

1. An anti-collision safety device (12) for a modular robot (10), wherein the anti-collision safety device (12) is configured to:
assign modules (16a-16d, 18a-18c) of the robot (10) to elements (24a, 24b) of a kinematic chain;
determine a geometric model (26, 28) for the elements (24a, 24b) of the kinematic chain based on data describing the geometry of the assigned modules (16a-16d, 18a-18c); and
calculate a collision-free movement of elements of the kinematic chain based on:
the determined geometric model (26, 28),
a model of the environment, and
a target position and/or orientation of at least one element (24a, 24b) of the kinematic chain
wherein the anti-collision safety device (12) is further configured to retrieve the data describing the geometry of the assigned modules (16a-16d, 18a-18c) from the assigned modules (16a-16d, 18a-18c);
**characterized in that**
the data defines different shapes for one or more of the modules (16a-16d, 18a-18c); and
the different shapes differ in regard to a level of approximation.

2. The anti-collision safety device (12) of claim 1,
wherein the anti-collision safety device (12) is further configured to extract transformations for the assigned modules (16a-16d, 18a-18c) from the data; and
wherein each of said transformations corresponds to one module (16a-16d, 18a-18c) and relates a proximal end of said module (16a-16d, 18a-18c) to a distal end of said module (16a-16d, 18a-18c).

3. The anti-collision safety device (12) of claim 2, wherein the anti-collision safety device (12) is further configured to determine the geometric model (26, 28) of the kinematic chain based on the extracted transformations.

4. The anti-collision safety device (12) of any one claims 1 to 3,
wherein the anti-collision safety device (12) is further configured to update said data stored in the modules (16a-16d, 18a-18c) through a wired or a radio interface (12a).

5. The anti-collision safety device (12) of any one of claims 1 to 4,
wherein the anti-collision safety device (12) is further configured to plan, for each of the modules (16a-16d, 18a-18c) of the robot (10), a first part (36a) of an intended path in a dynamic environment, the first part (36a) of the intended path avoiding regions (42) in which collisions might occur;
wherein the anti-collision safety device (12) is further configured to plan, for each of the modules (16a-16d, 18a-18c) of the robot (10), a fail-safe maneuver (38a) at the end of the first part (36a) of the intended path, the fail-safe maneuver (38a) avoiding regions in which collisions might occur;
wherein the anti-collision safety device (12) is further configured to plan, for each of the modules (16a-16d, 18a-18c) of the robot (10), a second part (36b) of the intended path in the dynamic environment; and
wherein the anti-collision safety device (12) is further configured to execute the fail-safe maneuver (38a) for at least those modules (16a-16d, 18a-18c) of the robot (10) for which it cannot be ascertained, before the end of the first part (36a) is reached, that the second part (36b) avoids regions (42) in which collisions might occur.

6. The anti-collision safety device (12) of claim 5,
wherein the fail-safe maneuver (38a, 38b) is directed at causing a standstill of the robot (10) at or before an end of the planned fail-safe maneuver (38a, 38b).

7. The anti-collision safety device (12) of claim 5 or 6,
wherein the anti-collision safety device (12) is further configured to abort the fail-safe maneuver (38a, 38b) if a recovery maneuver (40) becomes available which avoids regions (42) in which collisions might occur.

8. The anti-collision safety device (12) of any one of claims 1 to 7,
wherein the safety device (12) is further configured to identify a module (16a-16d, 18a-18c) that has been added to the modular robot (10) by receiving a control signal from said module (16a-16d, 18a-18c) via a wired or a radio interface (12a).

9. The anti-collision safety device (12) of claim 8,
wherein the safety device (12) is configured to identify the module (16a-16d, 18a-18c) that has been added to the modular robot (10) by receiving the control signal via a bus interface from said module (16a-16d, 18a-18c).

10. The anti-collision safety device (12) of any one of claims 1 to 7,
wherein the safety device (12) is further configured to identify a module (16a-16d, 18a-18c) that has been added to the modular robot (10) by evaluating a signal from a sensor of the safety device (12), for example, by analyzing an image of at least a part of the module (16a-16d, 18a-18c) or by activating a radio-frequency identification, RFID, tag reader.

11. A method of avoiding a collision between a reconfigurable modular robot (10) and obstacles (22) in an environment of the robot (10), the method comprising:
reconfiguring (36) the robot (10) by:
removing one or more of first link and/or joint modules (16a-16d, 18a-18c) from the modular robot (10); and
adding one or more second link and/or joint modules (16a-16d, 18a-18c) to the modular robot (10);
determining (38) a geometric model (26, 28) of the robot (10) based on data describing the geometry of the one or more second link and/or joint modules (16a-16d, 18a-18c); and
while operating the robot (10), using (40) the geometric model (26, 28) to plan collision-free paths of the remaining first and one or more second link and/or joint modules (16a-16d, 18a-18c);
wherein the data describing the geometry of the one or more second link and/or joint modules (16a-16d, 18a-18c) is retrieved from the one or more second link and/or joint modules (16a-16d, 18a-18c);
**characterized in that**
the data defines different shapes for one or more of the one or more second link and/or joint modules (16a-16d, 18a-18c); and
the different shapes differ in regard to a level of approximation.

12. The method of claim 11,
wherein the data comprises a series of transformations corresponding to the remaining first and one or more second link and/or joint modules (16a-16d, 18a-18c); and
wherein a pose of one of the remaining first and one or more second link and/or joint modules (16a-16d, 18a-18c) in a reference frame is given by applying the transformations of the series up to a transformation corresponding to the one of the remaining first and one or more second link and/or joint modules (16a-16d, 18a-18c).

13. The method of claim 12,
wherein determining (38) the geometric model (26, 28) of the robot (10) comprises determining positions of the one or more second link and/or joint modules (16a-16d, 18a-18c) in a kinematic chain represented by the geometric model (26, 28).

14. The method of claim 13,
wherein the remaining first and one or more second link and/or joint modules (16a-16d, 18a-18c) comprise nodes of a wired communication network and determining the position of the one or more second link and/or joint modules (16a-16d, 18a-18c) in the kinematic chain comprises identifying one or more nodes neighboring a node comprised in the one or more second link and/or joint modules (16a-16d, 18a-18c).

15. The method of claim 13, wherein determining the positions of the one or more second link and/or joint modules (16a-16d, 18a-18c) within the kinematic chain comprises:
taking one or more images of the robot (10) and determining a type of the remaining first and one or more second link and joint modules (16a-16d, 18a-18c) detected in said one or more images; or
scanning the robot (10) for radio-frequency identification, RFID, tags attached to or embedded into the one or more second link and/or joint modules (16a-16d, 18a-18c).

## Patentansprüche

1. Antikollisions-Sicherheitsvorrichtung (12) für einen modularen Roboter (10), wobei die Antikollisions-Sicherheitsvorrichtung (12) konfiguriert ist:
Module (16a-16d, 18a-18c) des Roboters (10) Elementen (24a, 24b) einer kinematischen Kette zuzuweisen;
ein geometrisches Modell (26, 28) für die Elemente (24a, 24b) der kinematischen Kette basierend auf Daten zu bestimmen, die die Geometrie der zugewiesenen Module (16a-16d, 18a-18c) beschreiben; und
eine kollisionsfreie Bewegung von Elementen der kinematischen Kette basierend auf Folgendem zu berechnen:
dem bestimmten geometrischen Modell (26, 28),
einem Modell der Umgebung und
einer Zielposition und/oder -orientierung wenigstens eines Elements (24a, 24b) der kinematischen Kette,
wobei die Antikollisions-Sicherheitsvorrichtung (12) ferner konfiguriert ist, die Daten, welche die Geometrie der zugewiesenen Module (16a-16d, 18a-18c) beschreiben, von den zugewiesenen Modulen (16a-16d, 18a-18c) abzurufen;
**dadurch gekennzeichnet, dass**
die Daten verschiedene Formen für ein oder mehrere der Module (16a-16d, 18a-18c) definieren; und
die verschiedenen Formen sich hinsichtlich eines Niveaus der Approximation unterscheiden.

2. Antikollisions-Sicherheitsvorrichtung (12) nach Anspruch 1,
wobei die Antikollisions-Sicherheitsvorrichtung (12) ferner konfiguriert ist, aus den Daten Transformationen für die zugewiesenen Module (16a-16d, 18a-18c) zu extrahieren; und
wobei jede der Transformationen einem Modul (16a-16d, 18a-18c) entspricht und ein proximales Ende des Moduls (16a-16d, 18a-18c) mit einem distalen Ende des Moduls (16a-16d, 18a-18c) in Beziehung setzt.

3. Antikollisions-Sicherheitsvorrichtung (12) nach Anspruch 2, wobei die Antikollisions-Sicherheitsvorrichtung (12) ferner konfiguriert ist, das geometrische Modell (26, 28) der kinematischen Kette basierend auf den extrahierten Transformationen zu bestimmen.

4. Antikollisions-Sicherheitsvorrichtung (12) nach einem der Ansprüche 1 bis 3,
wobei die Antikollisions-Sicherheitsvorrichtung (12) ferner konfiguriert ist, die in den Modulen (16a-16d, 18a-18c) gespeicherten Daten durch eine drahtgebundene oder Funkschnittstelle (12a) zu aktualisieren.

5. Antikollisions-Sicherheitsvorrichtung (12) nach einem der Ansprüche 1 bis 4,
wobei die Antikollisions-Sicherheitsvorrichtung (12) ferner konfiguriert ist, für jedes der Module (16a-16d, 18a-18c) des Roboters (10) einen ersten Teil (36a) eines vorgesehenen Weges in einer dynamischen Umgebung zu planen, wobei der erste Teil (36a) des vorgesehenen Weges Bereiche (42) vermeidet, in denen Kollisionen auftreten könnten;
wobei die Antikollisions-Sicherheitsvorrichtung (12) ferner konfiguriert ist, für jedes der Module (16a-16d, 18a-18c) des Roboters (10) ein bei Ausfall sicheres Manöver (38a) am Ende des ersten Teils (36a) des vorgesehenen Weges zu planen, wobei das bei Ausfall sichere Manöver (38a) Bereiche vermeidet, in denen Kollisionen auftreten könnten;
wobei die Antikollisions-Sicherheitsvorrichtung (12) ferner konfiguriert ist, für jedes der Module (16a-16d, 18a-18c) des Roboters (10) einen zweiten Teil (36b) des vorgesehenen Weges in der dynamischen Umgebung zu planen; und
wobei die Antikollisions-Sicherheitsvorrichtung (12) ferner konfiguriert ist, das bei Ausfall sichere Manöver (38a) für wenigstens jene Module (16a-16d, 18a-18c) des Roboters (10) auszuführen, für die nicht ermittelt werden kann, bevor das Ende des ersten Teils (36a) erreicht ist, dass der zweite Teil (36b) Bereiche (42) vermeidet, in denen Kollisionen auftreten könnten,

6. Antikollisions-Sicherheitsvorrichtung (12) nach Anspruch 5,
wobei das bei Ausfall sichere Manöver (38a, 38b) auf ein Verursachen eines Stillstands des Roboters (10) an einem oder vor einem Ende des geplanten, bei Ausfall sicheren Manövers (38a, 38b) gerichtet ist.

7. Antikollisions-Sicherheitsvorrichtung (12) nach Anspruch 5 oder 6,
wobei die Antikollisions-Sicherheitsvorrichtung (12) ferner konfiguriert ist, das bei Ausfall sichere Manöver (38a, 38b) abzubrechen, falls ein Wiederherstellungsmanöver (40) verfügbar wird, das Bereiche (42) vermeidet, in denen Kollisionen auftreten könnten.

8. Antikollisions-Sicherheitsvorrichtung (12) nach einem der Ansprüche 1 bis 7,
wobei die Sicherheitsvorrichtung (12) ferner konfiguriert ist, ein Modul (16a-16d, 18a-18c) zu identifizieren, das zu dem modularen Roboter (10) hinzugefügt worden ist, durch Empfangen eines Steuersignals von dem Modul (16a-16d, 18a-18c) über eine drahtgebundene Schnittstelle oder eine Funkschnittstelle (12a).

9. Antikollisions-Sicherheitsvorrichtung (12) nach Anspruch 8,
wobei die Sicherheitsvorrichtung (12) konfiguriert ist, das Modul (16a-16d, 18a-18c) zu identifizieren, das zu dem modularen Roboter (10) hinzugefügt worden ist, durch Empfangen des Steuersignals über eine Busschnittstelle von dem Modul (16a-16d, 18a-18c).

10. Antikollisions-Sicherheitsvorrichtung (12) nach einem der Ansprüche 1 bis 7,
wobei die Sicherheitsvorrichtung (12) ferner konfiguriert ist, ein Modul (16a-16d, 18a-18c) zu identifizieren, das zu dem modularen Roboter (10) hinzugefügt worden ist, durch Auswerten eines Signals von einem Sensor der Sicherheitsvorrichtung (12), beispielsweise durch Analysieren eines Bildes von wenigstens einem Teil des Moduls (16a-16d, 18a-18c) oder durch Aktivieren eines Hochfrequenzidentifikations-Etikettenlesers, RFID-Etikettenlesers.

11. Verfahren zum Vermeiden einer Kollision zwischen einem rekonfigurierbaren modularen Roboter (10) und Hindernissen (22) in einer Umgebung des Roboters (10), umfassend:
Rekonfigurieren (36) des Roboters (10) durch:
Entfernen eines oder mehrerer erster Verbindungs- und/oder Gelenkmodule (16a-16d, 18a-18c) von dem modularen Roboter (10); und
Hinzufügen eines oder mehrerer zweiter Verbindungs- und/oder Gelenkmodule (16a-16d, 18a-18c) zu dem modularen Roboter (10);
Bestimmen (38) eines geometrischen Modells (26, 28) des Roboters (10) basierend auf Daten, welche die Geometrie des einen oder der mehreren zweiten Verbindungs- und/oder Gelenkmodule (16a-16d, 18a-18c) beschreiben; und
während eines Betreibens des Roboters (10) Verwenden (40) des geometrischen Modells (26, 28), um kollisionsfreie Wege der verbleibenden ersten und des einen oder der mehreren zweiten Verbindungs- und/oder Gelenkmodule (16a-16d, 18a-18c) zu planen;
wobei die Daten, welche die Geometrie des einen oder der mehreren zweiten Verbindungs- und/oder Gelenkmodule (16a-16d, 18a-18c) beschreiben, von dem einen oder den mehreren zweiten Verbindungs- und/oder Gelenkmodulen (16a-16d, 18a-18c) abgerufen werden;
**dadurch gekennzeichnet** das,
die Daten verschiedene Formen für eines oder mehrere des einen oder der mehreren zweiten Verbindungs- und/oder Gelenkmodule (16a-16d, 18a-18c) definieren; und
sich die verschiedenen Formen hinsichtlich eines Niveaus einer Approximation unterscheiden.

12. Verfahren nach Anspruch 11,
wobei die Daten eine Folge von Transformationen umfassen, die den verbleibenden ersten und dem einen oder den mehreren zweiten Verbindungs- und/oder Gelenkmodule (16a-16d, 18a-18c) entsprechen; und
wobei eine Stellung von einem der verbleibenden ersten und von einem oder mehreren zweiten Verbindungs- und/oder Gelenkmodulen (16a-16d, 18a-18c) in einem Bezugsrahmen durch Anwenden der Transformationen der Folge bis zu einer Transformation gegeben ist, die dem einen der verbleibenden ersten und dem einen oder den mehreren zweiten Verbindungs- und/oder Gelenkmodulen (16a-16d, 18a-18c) entspricht.

13. Verfahren nach Anspruch 12,
wobei ein Bestimmen (38) des geometrischen Modells (26, 28) des Roboters (10) ein Bestimmen von Positionen des einen oder der mehreren zweiten Verbindungs- und/oder Gelenkmodule (16a-16d, 18a-18c) in einer durch das geometrische Modell (26, 28) repräsentierten kinematischen Kette umfasst.

14. Verfahren nach Anspruch 13,
wobei die verbleibenden ersten und das eine oder die mehreren zweiten Verbindungs- und/oder Gelenkmodule (16a-16d, 18a-18c) Knoten eines drahtgebundenen Kommunikationsnetzwerks umfassen und ein Bestimmen der Position des einen oder der mehreren zweiten Verbindungs- und/oder Gelenkmodule (16a-16d, 18a-18c) in der kinematischen Kette ein Identifizieren eines oder mehrerer Knoten umfasst, die einem Knoten benachbart sind, der von dem einen oder den mehreren zweiten Verbindungs- und/oder Gelenkmodulen (16a-16d, 18a-18c) umfasst ist.

15. Verfahren nach Anspruch 13, wobei ein Bestimmen der Positionen des einen oder der mehreren zweiten Verbindungs- und/oder Gelenkmodule (16a-16d, 18a-18c) innerhalb der kinematischen Kette umfasst:
Aufnehmen eines oder mehrerer Bilder des Roboters (10) und Bestimmen eines Typs der verbleibenden ersten und des einen oder der mehreren zweiten Verbindungs- und/Gelenkmodule (16a-16d, 18a-18c), die in dem einen oder den mehreren Bildern detektiert worden sind; oder
Abtasten des Roboters (10) nach Hochfrequenzidentifikations-Etiketten, RFID-Etiketten, die an dem einen oder den mehreren zweiten Verbindungs- und/oder Gelenkmodulen (16a-16d, 18a-18c) befestigt oder in diese eingebettet sind.

## Revendications

1. Dispositif de sécurité anti-collision (12) pour un robot modulaire (10), ce dispositif de sécurité anti-collision (12) étant configuré de façon à :
attribuer des modules (16a-16d, 18a-18c) du robot (10) à des éléments (24a, 24b) d'une chaîne cinématique ;
déterminer un modèle géométrique (26, 28) pour les éléments (24a, 24b) de la chaîne cinématique en se basant sur des données décrivant la géométrie des modules attribués (16a-16d, 18a-18c) ; et à
calculer un mouvement sans collision des éléments de la chaîne cinématique en se basant sur :
le modèle géométrique déterminé (26, 28),
un modèle de l'environnement, et
une position et/ou une orientation cible d'au moins un élément (24a, 24b) de la chaîne cinématique,
ce dispositif de sécurité anti-collision (12) étant configuré en outre de façon à récupérer les données décrivant la géométrie des modules attribués (16a-16d, 18a-18c) à partir des modules attribués (16a-16d, 18a-18c) ;
**caractérisé en ce que**
les données définissent des formes différentes pour un ou plusieurs des modules (16a-16d, 18a-18c) ; et
ces formes différentes diffèrent relativement à un niveau d'approximation.

2. Dispositif de sécurité anti-collision (12) selon la revendication 1,
ce dispositif de sécurité anti-collision (12) étant configuré en outre de façon à extraire des transformations pour les modules attribués (16a-16d, 18a-18c) à partir des données ; et
chacune desdites transformations correspondant à un module (16a-16d, 18a-18c) et rapportant une extrémité proximale dudit module (16a-16d, 18a-18c) à une extrémité distale dudit module (16a-16d, 18a-18c).

3. Dispositif de sécurité anti-collision (12) selon la revendication 2, ce dispositif de sécurité anti-collision (12) étant configuré en outre de façon à déterminer le modèle géométrique (26, 28) de la chaîne cinématique en se basant sur les transformations extraites.

4. Dispositif de sécurité anti-collision (12) selon l'une quelconque des revendications 1 à 3,
ce dispositif de sécurité anti-collision (12) étant configuré en outre de façon à mettre à jour lesdites données stockées dans les modules (16a-16d, 18a-18c) par l'intermédiaire d'une interface câblée ou radio (12a).

5. Dispositif de sécurité anti-collision (12) selon l'une quelconque des revendications 1 à 4,
ce dispositif de sécurité anti-collision (12) étant configuré en outre de façon à prévoir, pour chacun des modules (16a-16d, 18a-18c) du robot (10), une première partie (36a) d'un chemin visé dans un environnement dynamique, cette première partie (36a) du chemin visé évitant les régions (42) dans lesquelles des collisions pourraient se produire ;
ce dispositif de sécurité anti-collision (12) étant configuré en outre de façon à prévoir, pour chacun des modules (16a-16d, 18a-18c) du robot (10), une manœuvre à sécurité intégrée (38a) à la fin de la première partie (36a) du chemin visé, cette manœuvre à sécurité intégrée (38a) évitant les régions dans lesquelles des collisions pourraient se produire ;
ce dispositif de sécurité anti-collision (12) étant configuré en outre de façon à prévoir, pour chacun des modules (16a-16d, 18a-18c) du robot (10), une deuxième partie (36b) du chemin visé dans l'environnement dynamique ; et
le dispositif de sécurité anti-collision (12) étant configuré en outre de façon à exécuter la manœuvre à sécurité intégrée (38a) pour au moins les modules (16a-16d, 18a-18c) du robot (10) pour lesquels il ne peut pas être déterminé, avant que la fin de la première partie (36a) ne soit atteinte, que la deuxième partie (36b) évite des régions (42) dans lesquelles des collisions pourraient se produire.

6. Dispositif de sécurité anti-collision (12) selon la revendication 5,
dans lequel la manœuvre à sécurité intégrée (38a, 38b) a pour but de causer un arrêt du robot (10) lors de ou avant une fin de la manœuvre à sécurité intégrée prévue (38a, 38b).

7. Dispositif de sécurité anti-collision (12) selon la revendication 5 ou 6,
ce dispositif de sécurité anti-collision (12) étant configuré en outre de façon à abandonner la manœuvre à sécurité intégrée (38a, 38b) si une manœuvre de rétablissement (40) devient disponible qui évite des régions (42) dans lesquelles des collisions pourraient se produire.

8. Dispositif de sécurité anti-collision (12) selon l'une quelconque des revendications 1 à 7,
ce dispositif de sécurité (12) étant configuré en outre de façon à identifier un module (16a-16d, 18a-18c) qui a été ajouté au robot modulaire (10) en recevant un signal de commande venant dudit module (16a-16d, 18a-18c) via une interface câblée ou radio (12a).

9. Dispositif de sécurité anti-collision (12) selon la revendication 8,
ce dispositif de sécurité (12) étant configuré de façon à identifier un module (16a-16d, 18a-18c) qui a été ajouté au robot modulaire (10) en recevant le signal de commande venant dudit module (16a-16d, 18a-18c) via une interface de bus.

10. Dispositif de sécurité anti-collision (12) selon l'une quelconque des revendications 1 à 7,
ce dispositif de sécurité (12) étant configuré en outre de façon à identifier un module (16a-16d, 18a-18c) qui a été ajouté au robot modulaire (10) en évaluant un signal venant d'un capteur du dispositif de sécurité (12), par exemple, en analysant une image d'au moins une partie du module (16a-16d, 18a-18c) ou en activant un lecteur d'étiquette d'identification par radiofréquence, RFID.

11. Procédé pour éviter une collision entre un robot modulaire reconfigurable (10) et des obstacles (22) dans un environnement du robot (10), ce procédé comprenant :
la reconfiguration (36) du robot (10) en :
enlevant un ou plusieurs des premiers modules de liaison et/ou modules communs (16a-16d, 18a-18c) du robot modulaire (10) ; et en
ajoutant un ou plusieurs deuxièmes modules de liaison et/ou modules communs (16a-16d, 18a-18c) au robot modulaire (10) ;
la détermination (38) d'un modèle géométrique (26, 28) du robot (10) en se basant sur des données décrivant la géométrie du ou des deuxièmes modules de liaison et/ou modules communs (16a-16d, 18a-18c) ; et
lors de l'utilisation du robot (10), l'utilisation (40) du modèle géométrique (26, 28) afin de prévoir des chemins sans collision des premiers modules restants et du ou des deuxièmes modules de liaison et/ou modules communs (16a-16d, 18a-18c) ;
les données décrivant la géométrie du ou des deuxièmes modules de liaison et/ou modules communs (16a-16d, 18a-18c) étant récupérées du ou des deuxièmes modules de liaison et/ou modules communs (16a-16d, 18a-18c) ;
**caractérisé en ce que**
les données définissent des formes différentes pour un ou plusieurs du ou des deuxièmes modules de liaison et/ou modules communs (16a-16d, 18a-18c) ; et
ces formes différentes différant relativement à un niveau d'approximation.

12. Procédé selon la revendication 11,
dans lequel les données comprennent une série de transformations correspondant aux premiers modules restants et à un ou plusieurs deuxièmes modules de liaison et/ou modules communs (16a-16d, 18a-18c) ; et
dans lequel une pose d'un des premiers modules restants et d'un ou de plusieurs deuxièmes modules de liaison et/ou modules communs (16a-16d, 18a-18c) dans un cadre de référence est donnée en appliquant les transformations de la série jusqu'à une transformation correspondant à l'un des premiers modules restants et à un ou plusieurs modules de liaison et/ou des modules communs (16a-16d, 18a-18c).

13. Procédé selon la revendication 12,
dans lequel la détermination (38) du modèle géométrique (26, 28) du robot (10) comprend la détermination de positions du ou des deuxièmes modules de liaison et/ou modules communs (16a-16d, 18a-18c) dans une chaîne cinématique représentée par le modèle géométrique (26, 28).

14. Procédé selon la revendication 13,
dans lequel les premiers modules restants et un ou plusieurs deuxièmes modules de liaison et/ou modules communs (16a-16d, 18a-18c) comprennent des nœuds d'un réseau de communication câblé et la détermination de la position du ou des deuxièmes modules de liaison et/ou modules communs (16a-16d, 18a-18c) dans la chaîne cinématique comprend l'identification d'un ou de plusieurs nœuds voisins d'un nœud compris dans le ou les deuxièmes modules de liaison et/ou modules communs (16a-16d, 18a-18c).

15. Procédé selon la revendication 13, dans lequel la détermination des positions du ou des deuxièmes modules de liaison et/ou modules communs (16a-16d, 18a-18c) dans la chaîne cinématique comprend :
la prise d'une ou de plusieurs images du robot (10) et la détermination d'un type des premiers modules restants et du ou des deuxièmes modules de liaison et/ou modules communs (16a-16d, 18a-18c) détecté dans ladite ou lesdits images ; ou
le balayage du robot (10) pour des étiquettes d'identification par radiofréquence, RFID, attachées à ou encastrées dans le ou les deuxièmes modules de liaison et/ou modules communs (16a-16d, 18a-18c).
